# EUROPEAN PATENT APPLICATION

(11) **EP 3 217 635 A1**
(43) Date of publication of application: **13.09.2017**
(21) Application number: 14906675.5
(22) Date of filing: 28.11.2014
(51) Int. Cl.: H04M 1/725, G09G 3/34

(54) **ADJUSTMENT METHOD AND DEVICE FOR TERMINAL-SETTING PARAMETER**

(71) Applicant: Huawei Technologies Co. Ltd., Shenzhen, Guangdong 518129 (CN)
(72) Inventor: CHIANG, FeiKuo, Shenzhen Guangdong 518129 (CN); XIONG, Qiang, Shenzhen Guangdong 518129 (CN)
(74) Representative: Gill Jennings & Every LLP
(86) International application number: PCT/CN2014/092537
(87) International publication number: WO 2016/082200

(57) **Abstract**

Embodiments of the present disclosure provide a terminal setting parameter adjustment method and apparatus, so as to resolve a problem of increased user operation complexity in a current terminal setting adjustment method. The method includes: after an application program in a terminal is started, displaying a setting control in a display area of the terminal; after the setting control receives a call instruction, modifying a current parameter value of a first setting parameter to a latest parameter value that is of the first setting parameter and that is to be used when the application program runs, where the first setting parameter is a setting parameter that is in the terminal setting parameters and whose parameter value needs to be modified after the application program is started; and when the application program is exited, modifying a current parameter value of the first setting parameter to the parameter value that is of the first setting parameter and that is obtained before the application program is started.

## Description

### TECHNICAL FIELD

The present disclosure relates to the field of computer technologies, and in particular, to a terminal setting parameter adjustment method and apparatus.

### BACKGROUND

Currently, an increasingly enhanced processing capability of a mobile chip brings a higher display resolution and a larger screen size. However, evolution of a battery technology cannot keep pace with this development speed. Therefore, in a design of a mobile terminal, screen luminance, a time limit for triggering automatic screen-off, a platform running frequency, and the like are reduced as much as possible, so as to improve a battery life of the product.

In a use process, for example, a user expects that a screen is more luminous when taking photos outdoors, or expects that a system does not automatically sleep frequently when checking emails. In these cases, to modify a setting, the user generally needs to suspend a current task, and then enter a system setting screen to modify the setting. The whole process is relatively complex. In addition, after the setting is modified, a mobile terminal always runs according to the modified setting, and a battery life of the mobile terminal is affected. In some scenarios in which a setting needs to be quickly modified, the user usually misses a critical time after completing the setting step by step.

By using an existing terminal setting adjustment method, if a setting of a terminal needs to be adjusted, after an application program is started, to achieve an optimal running effect of the application program, a screen of the application program needs to be exited, a modification is performed on a system setting screen, and then the screen of the application program is reentered. However, when the application program is exited, if the system setting screen is not reentered for modifying the setting of the terminal, a battery life of the terminal may be reduced; if the system setting screen is reentered for modifying the setting of the terminal to improve the battery life of the terminal, in a running process of the application program, it is very cumbersome to repeatedly enter the system setting screen for modifying the setting of the terminal.

In conclusion, by using the existing terminal setting adjustment method, a screen of an application program needs to be repeatedly exited to enter a system setting screen for modifying a setting of a terminal, so that after an application program in the terminal is started, an optimal running effect of the application program in the terminal is achieved, and in addition, impact on a battery life of the terminal is reduced as much as possible. Therefore, user operation complexity is increased.

### SUMMARY

Embodiments of the present disclosure provide a terminal setting parameter adjustment method and apparatus, so as to resolve a problem of increased user operation complexity in a current terminal setting adjustment method.

According to a first aspect, a terminal setting parameter adjustment method is provided, including:
after an application program in a terminal is started, displaying a setting control in a display area of the terminal;
after the setting control receives a call instruction, modifying a current parameter value of a first setting parameter to a latest parameter value that is of the first setting parameter and that is to be used when the application program runs, where the first setting parameter is a setting parameter that is in the terminal setting parameters and whose parameter value needs to be modified after the application program is started; and
when the application program is exited, modifying a current parameter value of the first setting parameter to the parameter value that is of the first setting parameter and that is obtained before the application program is started.

With reference to the first aspect, in a first possible implementation manner, when the application program is exited, if the first setting parameter is display luminance, the modifying a current parameter value of the first setting parameter to the parameter value that is of the first setting parameter and that is obtained before the application program is started specifically includes:
adjusting, according to a preset luminance adjustment step value, a luminance value of current display luminance of the terminal to a luminance value of display luminance that is of the terminal and that is obtained before the application program is started.

With reference to the first aspect, in a second possible implementation manner, the method further includes:
after the setting control receives an instruction for increasing a parameter value, if it is determined that a parameter value of only one setting parameter in the terminal setting parameters needs to be modified after the application program is started, increasing the parameter value of the setting parameter whose parameter value needs to be modified; or
after the setting control receives an instruction for decreasing a parameter value, if it is determined that a parameter value of only one setting parameter in the terminal setting parameters needs to be modified after the application program is started, decreasing the parameter value of the setting parameter whose parameter value needs to be modified.

With reference to the first aspect, in a third possible implementation manner, the method further includes:
after the setting control receives a modification instruction, displaying a parameter user-defined setting screen, where the parameter user-defined setting screen displays the setting parameter that is in the terminal setting parameters and whose parameter value needs to be modified after the application program is started, and a parameter value that is used when the application program runs; and
after the parameter user-defined setting screen receives a parameter value of one setting parameter of the setting parameters whose parameter values need to be modified, using the received parameter value as a latest parameter value that is of the setting parameter and that is to be used when the application program runs, and saving the parameter value.

With reference to the third possible implementation manner of the first aspect, in a fourth possible implementation manner, after the displaying a parameter user-defined setting screen, the method further includes:
after the parameter user-defined setting screen receives an addition instruction, displaying a screen for adding a setting parameter;
receiving a second setting parameter and a parameter value by using the screen for adding a setting parameter, and using the received parameter value as a latest parameter value that is of the second setting parameter and that is obtained after the application program is started; and
saving the received second setting parameter and the latest parameter value that is of the second setting parameter and that is obtained after the application program is started.

With reference to the third possible implementation manner of the first aspect, in a fifth possible implementation manner, after the displaying a parameter user-defined setting screen, the method further includes:
after the parameter user-defined setting screen receives a deletion instruction, displaying a screen for deleting a setting parameter;
receiving a to-be-deleted setting parameter by using the screen for deleting a setting parameter, where the to-be-deleted setting parameter is a setting parameter that needs to be deleted from the setting parameters that are in the terminal setting parameters and whose parameter values need to be modified after the application program is started; and
deleting, from the setting parameters that are in the terminal setting parameters and whose parameter values need to be modified after the application program is started, the to-be-deleted setting parameter received by using the screen for deleting a setting parameter.

According to a second aspect, a terminal setting parameter adjustment method is provided, including:
a display module, configured to: after an application program in a terminal is started, display a setting control in a display area of the terminal;
a modification module, configured to: after the setting control receives a call instruction, modify a current parameter value of a first setting parameter to a latest parameter value that is of the first setting parameter and that is to be used when the application program runs, where the first setting parameter is a setting parameter that is in the terminal setting parameters and whose parameter value needs to be modified after the application program is started; and
a restoration module, configured to: when the application program is exited, modify a current parameter value of the first setting parameter to the parameter value that is of the first setting parameter and that is obtained before the application program is started.

With reference to the second aspect, in a first possible implementation manner, the restoration module is specifically configured to:
when the application program is exited, if the first setting parameter is display luminance, adjust, according to a preset luminance adjustment step value, a luminance value of current display luminance of the terminal to a luminance value of display luminance that is of the terminal and that is obtained before the application program is started.

With reference to the second aspect, in a second possible implementation manner, the apparatus further includes a first user-defined setting module, and the first user-defined setting module is configured to:
after the setting control receives an instruction for increasing a parameter value, if it is determined that a parameter value of only one setting parameter in the terminal setting parameters needs to be modified after the application program is started, increase the parameter value of the setting parameter whose parameter value needs to be modified; or after the setting control receives an instruction for decreasing a parameter value, if it is determined that a parameter value of only one setting parameter in the terminal setting parameters needs to be modified after the application program is started, decrease the parameter value of the setting parameter whose parameter value needs to be modified.

With reference to the second aspect, in a third possible implementation manner, the apparatus further includes a second user-defined setting module, and the second user-defined setting module is configured to:
after the setting control receives a modification instruction, display a parameter user-defined setting screen, where the parameter user-defined setting screen displays the setting parameter that is in the terminal setting parameters and whose parameter value needs to be modified after the application program is started, and a parameter value that is used when the application program runs; and after the parameter user-defined setting screen receives a parameter value of one setting parameter of the setting parameters whose parameter values need to be modified, use the received parameter value as a latest parameter value that is of the setting parameter and that is to be used when the application program runs, and save the parameter value.

With reference to the third possible implementation manner of the second aspect, in a fourth possible implementation manner, the second user-defined setting module is further configured to:
after the parameter user-defined setting screen is displayed and the parameter user-defined setting screen receives an addition instruction, display a screen for adding a setting parameter; receive a second setting parameter and a parameter value by using the screen for adding a setting parameter, and use the received parameter value as a latest parameter value that is of the second setting parameter and that is obtained after the application program is started; and save the received second setting parameter and the latest parameter value that is of the second setting parameter and that is obtained after the application program is started.

With reference to the third possible implementation manner of the second aspect, in a fifth possible implementation manner, the second user-defined setting module is further configured to:
after the parameter user-defined setting screen is displayed and the parameter user-defined setting screen receives a deletion instruction, display a screen for deleting a setting parameter; receive a to-be-deleted setting parameter by using the screen for deleting a setting parameter, where the to-be-deleted setting parameter is a setting parameter that needs to be deleted from the setting parameters that are in the terminal setting parameters and whose parameter values need to be modified after the application program is started; and delete, from the setting parameters that are in the terminal setting parameters and whose parameter values need to be modified after the application program is started, the to-be-deleted setting parameter received by using the screen for deleting a setting parameter.

Beneficial effects of the embodiments of the present disclosure include:

According to the terminal setting parameter adjustment method and apparatus provided in the embodiments of the present disclosure, after an application program in a terminal is started, a setting control is displayed in a display area of the terminal. After the setting control receives a call instruction, a current parameter value of a terminal setting parameter is modified to a parameter value that is to be used when the application program runs, so that an optimal running effect of the application program in the terminal is achieved. When the application program is exited, a current parameter value of the terminal setting parameter is modified to a parameter value obtained before the application program is started, so that a battery life of the terminal is ensured. In addition, according to this method, a screen of the application program does not need to be repeatedly exited to enter a system setting screen for a terminal setting modification. Therefore, user operation complexity is reduced, and user operation convenience is improved.

### BRIEF DESCRIPTION OF DRAWINGS

FIG. 1 is flowchart 1 of a terminal setting parameter adjustment method according to an embodiment of the present disclosure;
FIG. 2 is flowchart 2 of a terminal setting parameter adjustment method according to an embodiment of the present disclosure;
FIG. 3 is flowchart 1 of a user-defined setting parameter modification according to an embodiment of the present disclosure;
FIG. 4 is flowchart 2 of a user-defined setting parameter modification according to an embodiment of the present disclosure;
FIG. 5 is flowchart 3 of a user-defined setting parameter modification according to an embodiment of the present disclosure;
FIG. 6 is schematic structural diagram 1 of a terminal setting parameter adjustment apparatus according to an embodiment of the present disclosure;
FIG. 7 is schematic structural diagram 2 of a terminal setting parameter adjustment apparatus according to an embodiment of the present disclosure; and
FIG. 8 is schematic structural diagram 3 of a terminal setting parameter adjustment apparatus according to an embodiment of the present disclosure.

### DESCRIPTION OF EMBODIMENTS

Embodiments of the present disclosure provide a terminal setting parameter adjustment method and apparatus. After an application program in a terminal is started, a setting control is displayed in a display area of the terminal. The terminal may receive a call instruction according to the displayed setting control, and modifies a parameter value of a terminal setting parameter, so that an optimal running effect of the application program in the terminal is achieved. In addition, when the application program is exited, the parameter value of the terminal setting parameter is restored to a parameter value obtained before the application program is started, so that a battery life of the terminal is ensured. In addition, the method is automatically performed by the terminal, and a user does not need to repeatedly exit a screen of the application program to enter a system setting screen for a terminal setting modification. Therefore, user operation complexity is reduced, and user operation convenience is improved.

The terminal in the embodiments of the present disclosure may be a mobile phone, a tablet computer, a personal computer, or another electronic device. The terminal is provided with an internal operation processing unit, a storage module, a display driver unit, a display module, an input module, and the like. The internal operation processing unit is mainly responsible for program running. The storage module is responsible for saving a program, data, a configuration parameter, and the like. The display driver unit controls driving of the display module. The input module receives an input instruction.

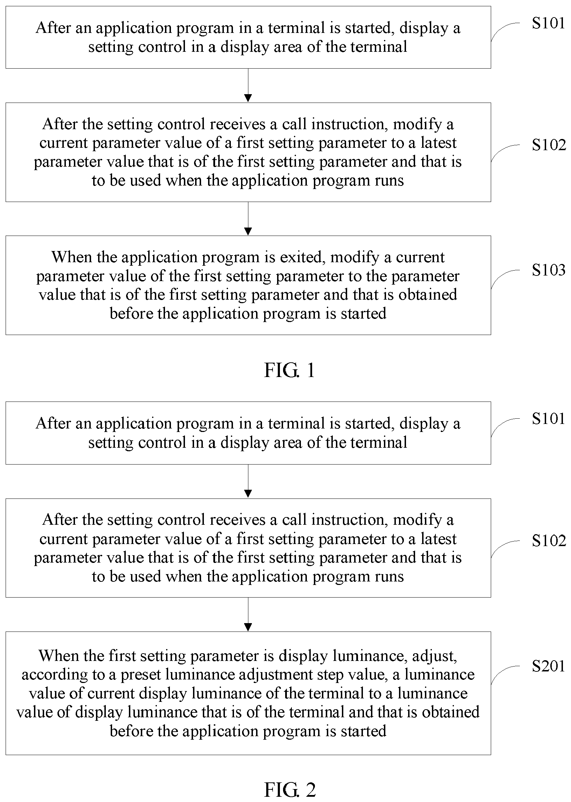

An embodiment of the present disclosure provides a terminal setting parameter adjustment method. As shown in FIG. 1, the method includes the following steps.

S101. After an application program in a terminal is started, display a setting control in a display area of the terminal.

The setting control may be a floating control. The floating control may be automatically hidden, or transparency of the floating control may be automatically adjusted. In this way, display of a screen of the application program may not be affected. The setting control is displayed in the display area of the terminal. The application program may create a parameter setting thread. In this way, each application program needs to have a parameter setting function. Alternatively, the application program may call a parameter setting thread. In this way, each application program does not need to have a parameter setting function, and each application program needs only to have a function of calling a parameter setting thread. The parameter setting thread is responsible for creating and using a parameter value corresponding to the application program, and displaying the setting control in the display area.

S102. After the setting control receives a call instruction, modify a current parameter value of a first setting parameter to a latest parameter value that is of the first setting parameter and that is to be used when the application program runs.

The call instruction may be tapping the setting control, double tapping the setting control, touching and holding the setting control, touching the setting control, or the like.

The first setting parameter is a setting parameter that is in the terminal setting parameters and whose parameter value needs to be modified after the application program is started. S102 is repeatedly performed, until a parameter value of each setting parameter in setting parameters that are in the terminal setting parameters and whose parameter values need to be modified is modified to a latest parameter value that is to be used when the application program runs.

The latest parameter value that is of the first setting parameter and that is to be used when the application program runs may be preset before the application program runs.

After the application program is started, modifying a setting parameter that is in the terminal setting parameters and whose parameter value needs to be modified includes: during program running, modifying a parameter value of the setting parameter to improve a running effect of the application program in the terminal; and when the application program is exited, that is, the terminal enters another application scenario, resaving the setting parameter to a parameter value that helps reduce power consumption, so as to improve a battery life. There may be one or more setting parameters whose parameter values need to be modified. For example, during email check, a time limit for triggering automatic screen-off of the terminal is prolonged, or automatic screen-off is canceled; during photo shooting, display luminance is intensified; and during game playing, a limitation on a running speed of an internal operation processing unit in the terminal is canceled.

S103. When the application program is exited, modify a current parameter value of the first setting parameter to the parameter value that is of the first setting parameter and that is obtained before the application program is started. S103 is repeatedly performed, until a parameter value of each setting parameter in setting parameters that are in the terminal setting parameters and whose parameter values need to be modified is resaved to a parameter value obtained before the application program is started.

Preferably, as shown in FIG. 2, when the application program is exited, if the first setting parameter is display luminance, S103 specifically includes:

S201. Adjust, according to a preset luminance adjustment step value, a luminance value of current display luminance of the terminal to a luminance value of display luminance that is of the terminal and that is obtained before the application program is started, so that the display luminance is gradually resaved to the display luminance obtained before the application program is started. A parameter value of each setting parameter except the display luminance in setting parameters that are in the terminal setting parameters and whose parameter values need to be modified is resaved to a parameter value obtained before the application program is started.

Optionally, the terminal setting parameter adjustment method provided in this embodiment of the present disclosure further includes:
after the setting control receives an instruction for increasing a parameter value, if it is determined that a parameter value of only one setting parameter in the terminal setting parameters needs to be modified after the application program is started, increasing the parameter value of the setting parameter whose parameter value needs to be modified; or
after the setting control receives an instruction for decreasing a parameter value, if it is determined that a parameter value of only one setting parameter in the terminal setting parameters needs to be modified after the application program is started, decreasing the parameter value of the setting parameter whose parameter value needs to be modified.

The instruction for increasing a parameter value, the instruction for decreasing a parameter value, and the call instruction need to be distinguished from one another. For example, upward swiping performed in a display area of the setting control is the instruction for increasing a parameter value, and downward swiping performed in the display area of the setting control is the instruction for decreasing a parameter value.

For example, during email check, a parameter value of only one setting parameter in the terminal setting parameters needs to be modified, that is, a time limit for triggering automatic screen-off whose parameter value is 10s. If the setting control receives the instruction for increasing a parameter value, the parameter value of the time limit for triggering automatic screen-off is increased according to a preset relationship; if the setting control receives the instruction for decreasing a parameter value, the parameter value of the time limit for triggering automatic screen-off is decreased according to the preset relationship.

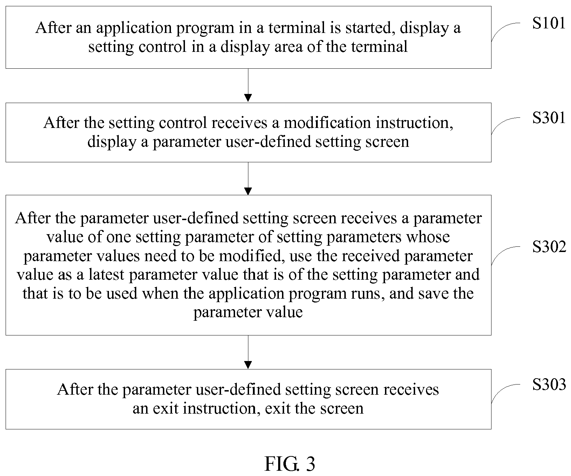

Optionally, as shown in FIG. 3, the terminal setting parameter adjustment method provided in this embodiment of the present disclosure further includes the following steps.

S301. After the setting control receives a modification instruction, display a parameter user-defined setting screen, where the parameter user-defined setting screen displays a setting parameter that is in the terminal setting parameters and whose parameter value needs to be modified after the application program is started, and a parameter value that is used when the application program runs.

The modification instruction may be tapping the setting control, double tapping the setting control, touching and holding the setting control, touching the setting control, or the like, provided that the modification instruction can be distinguished from the call instruction, the instruction for increasing a parameter value, and the instruction for decreasing a parameter value.

S302. After the parameter user-defined setting screen receives a parameter value of one setting parameter of the setting parameters whose parameter values need to be modified, use the received parameter value as a latest parameter value that is of the setting parameter and that is to be used when the application program runs, and save the parameter value.

S303. After the parameter user-defined setting screen receives an exit instruction, exit the screen, so as to complete setting of a parameter value that is to be used when the application program runs.

For example, during email check, if the setting control receives a modification instruction, the setting parameter on the parameter user-defined setting screen is a time limit for triggering automatic screen-off whose parameter value is 10 seconds. After the parameter user-defined setting screen receives a time limit for triggering automatic screen-off, for example, 20 seconds, the time limit for triggering automatic screen-off is automatically modified to 20s, and the modified time limit for triggering automatic screen-off is saved. That is, if a parameter value for the email check is used, the time limit for triggering automatic screen-off is 20s during the email check.

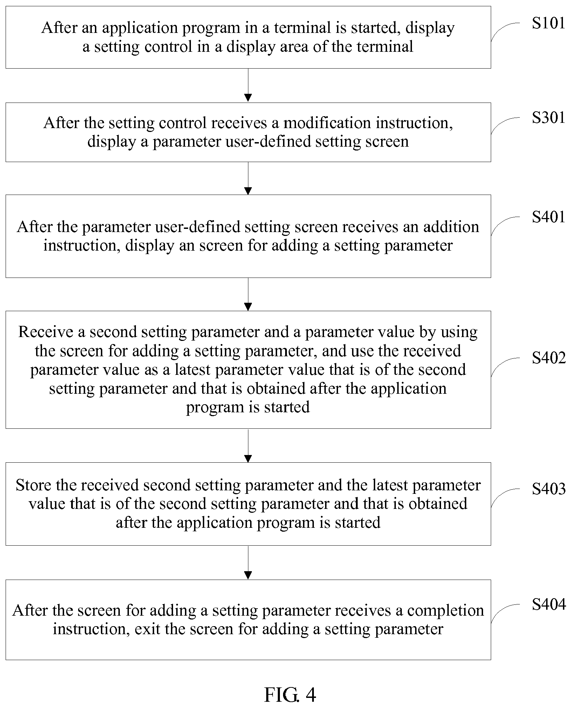

Optionally, as shown in FIG. 4, according to the terminal setting parameter adjustment method provided in this embodiment of the present disclosure, after the parameter user-defined setting screen is displayed, the method further includes the following steps.
S401. After the parameter user-defined setting screen receives an addition instruction, display a screen for adding a setting parameter.
S402. Receive a second setting parameter and a parameter value by using the screen for adding a setting parameter, and use the received parameter value as a latest parameter value that is of the second setting parameter and that is obtained after the application program is started.
S403. Save the second setting parameter and the latest parameter value that is of the second setting parameter and that is obtained after the application program is started.
S402 and S403 are repeatedly performed, until both the second setting parameter and the parameter value obtained by using the screen for adding a setting parameter are saved.
S404. After the screen for adding a setting parameter receives a completion instruction, exit the screen for adding a setting parameter.

For example, during email check, if the setting control receives a modification instruction, the setting parameter on the parameter user-defined setting screen is a time limit for triggering automatic screen-off, which is 20 seconds. If an addition instruction is received by using the parameter user-defined setting screen, the screen for adding a setting parameter receives a setting parameter and a parameter value, such as display luminance 50%. Therefore, during the email check, another setting parameter whose parameter value needs to be modified is added based on one original setting parameter (that is, the time limit for triggering automatic screen-off) that is in the terminal setting parameters and whose parameter value needs to be modified. The two setting parameters are the time limit for triggering automatic screen-off and the display luminance. A parameter value of the time limit for triggering automatic screen-off is 20s, and a parameter value of the display luminance is 50%.

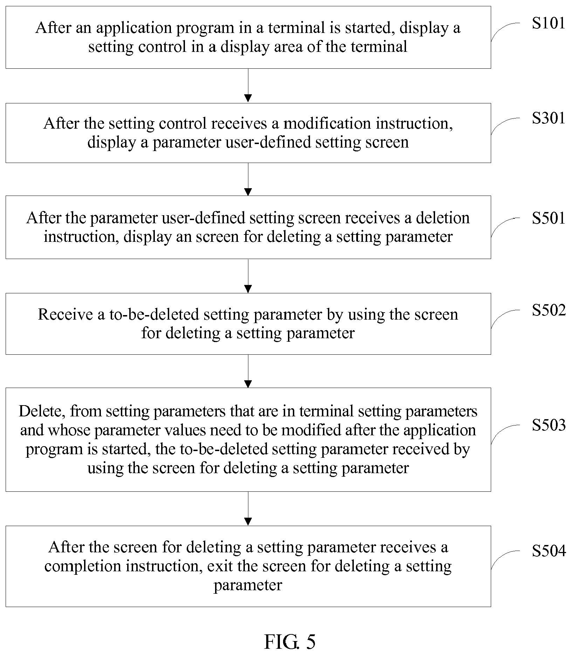

Optionally, as shown in FIG. 5, according to the terminal setting parameter adjustment method provided in this embodiment of the present disclosure, after the parameter user-defined setting screen is displayed, the method further includes the following steps.
S501. After the parameter user-defined setting screen receives a deletion instruction, display a screen for deleting a setting parameter.
S502. Receive a to-be-deleted setting parameter by using the screen for deleting a setting parameter, where the to-be-deleted setting parameter is a setting parameter that needs to be deleted from setting parameters that are in the terminal setting parameters and whose parameter values need to be modified after the application program is started.
S503. Delete, from the setting parameters that are in the terminal setting parameters and whose parameter values need to be modified after the application program is started, the to-be-deleted setting parameter received by using the screen for deleting a setting parameter.
S504. After the screen for deleting a setting parameter receives a completion instruction, exit the screen for deleting a setting parameter.

For example, during email check, setting parameters that are in the terminal setting parameters and whose parameter values need to be modified are a time limit for triggering automatic screen-off and display luminance. If a deletion instruction is received by using the parameter user-defined setting screen, the screen for deleting a setting parameter receives the display luminance. Therefore, the display luminance is deleted from the setting parameters that are in the terminal setting parameters and whose parameter values need to be modified during the email check. Therefore, during the email check, a parameter value of only one setting parameter in the terminal setting parameters needs to be modified, that is, the time limit for triggering automatic screen-off.

On the basis of a same disclosure concept, an embodiment of the present disclosure further provides a terminal setting parameter adjustment apparatus. A problem resolution principle of the apparatus is similar to that of the foregoing terminal setting parameter adjustment method. Therefore, for an implementation of the apparatus, refer to the implementation of the foregoing method. Repeated details are not described again.

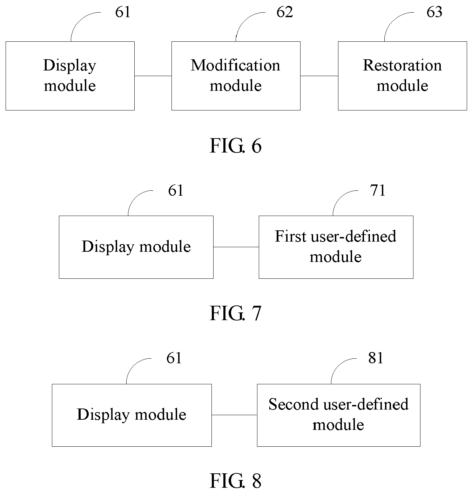

As shown in FIG. 6, the terminal setting parameter adjustment apparatus provided in this embodiment of the present disclosure includes:
a display module 61, configured to: after an application program in a terminal is started, display a setting control in a display area of the terminal;
a modification module 62, configured to: after the setting control receives a call instruction, modify a current parameter value of a first setting parameter to a latest parameter value that is of the first setting parameter and that is to be used when the application program runs, where the first setting parameter is a setting parameter that is in the terminal setting parameters and whose parameter value needs to be modified after the application program is started; and
a restoration module 63, configured to: when the application program is exited, modify a current parameter value of the first setting parameter to the parameter value that is of the first setting parameter and that is obtained before the application program is started.

Optionally, the restoration module 63 is specifically configured to: when the application program is exited, if the first setting parameter is display luminance, adjust, according to a preset luminance adjustment step value, a luminance value of current display luminance of the terminal to a luminance value of display luminance that is of the terminal and that is obtained before the application program is started.

Optionally, as shown in FIG. 7, the terminal setting parameter adjustment apparatus provided in this embodiment of the present disclosure further includes a first user-defined setting module 71. The first user-defined setting module 71 is configured to:
after the setting control receives an instruction for increasing a parameter value, if it is determined that a parameter value of only one setting parameter in the terminal setting parameters needs to be modified after the application program is started, increase the parameter value of the setting parameter whose parameter value needs to be modified; or after the setting control receives an instruction for decreasing a parameter value, if it is determined that a parameter value of only one setting parameter in the terminal setting parameters needs to be modified after the application program is started, decrease the parameter value of the setting parameter whose parameter value needs to be modified.

Optionally, as shown in FIG. 8, the terminal setting parameter adjustment apparatus provided in this embodiment of the present disclosure further includes a second user-defined setting module 81. The second user-defined setting module 81 is configured to:
after the setting control receives a modification instruction, display a parameter user-defined setting screen, where the parameter user-defined setting screen displays the setting parameter that is in the terminal setting parameters and whose parameter value needs to be modified after the application program is started, and a parameter value that is used when the application program runs; and after the parameter user-defined setting screen receives a parameter value of one setting parameter of the setting parameters whose parameter values need to be modified, use the received parameter value as a latest parameter value that is of the setting parameter and that is to be used when the application program runs, and save the parameter value.

Optionally, the second user-defined setting module 81 is further configured to: after the parameter user-defined setting screen is displayed and the parameter user-defined setting screen receives an addition instruction, display a screen for adding a setting parameter; receive a second setting parameter and a parameter value by using the screen for adding a setting parameter, and use the received parameter value as a latest parameter value that is of the second setting parameter and that is obtained after the application program is started; and save the received second setting parameter and the latest parameter value that is of the second setting parameter and that is obtained after the application program is started.

Optionally, the second user-defined setting module 81 is further configured to: after the parameter user-defined setting screen is displayed and the parameter user-defined setting screen receives a deletion instruction, display a screen for deleting a setting parameter; receive a to-be-deleted setting parameter by using the screen for deleting a setting parameter, where the to-be-deleted setting parameter is a setting parameter that needs to be deleted from the setting parameters that are in the terminal setting parameters and whose parameter values need to be modified after the application program is started; and delete, from the setting parameters that are in the terminal setting parameters and whose parameter values need to be modified after the application program is started, the to-be-deleted setting parameter received by using the screen for deleting a setting parameter.

Persons skilled in the art should understand that the embodiments of the present disclosure may be provided as a method, a system, or a computer program product. Therefore, the present disclosure may use a form of hardware only embodiments, software only embodiments, or embodiments with a combination of software and hardware. In addition, the present disclosure may use a form of a computer program product that is implemented on one or more computer-usable savage media (including but not limited to a disk memory, a CD-ROM, an optical memory, and the like) that include computer-usable program code.

The present disclosure is described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be saved in a computer readable memory that can instruct the computer or any other programmable data processing device to work in a specific manner, so that the instructions saved in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some **preferred embodiments** of the present disclosure have been described, persons skilled in the art can make changes and modifications to these embodiments once they learn the basic inventive concept. Therefore, the following claims are intended to be construed as to cover the preferred embodiments and all changes and modifications falling within the scope of the present disclosure.

Obviously, persons skilled in the art can make various modifications and variations to the embodiments of the present disclosure without departing from the spirit and scope of the embodiments of the present disclosure. The present disclosure is intended to cover these modifications and variations provided that they fall within the scope of protection defined by the following claims and their equivalent technologies.

## Claims

1. A terminal setting parameter adjustment method, comprising:
after an application program in a terminal is started, displaying a setting control in a display area of the terminal;
after the setting control receives a call instruction, modifying a current parameter value of a first setting parameter to a latest parameter value that is of the first setting parameter and that is to be used when the application program runs, wherein the first setting parameter is a setting parameter that is in the terminal setting parameters and whose parameter value needs to be modified after the application program is started; and
when the application program is exited, modifying a current parameter value of the first setting parameter to the parameter value that is of the first setting parameter and that is obtained before the application program is started.

2. The method according to claim 1, wherein when the application program is exited, if the first setting parameter is display luminance, the modifying a current parameter value of the first setting parameter to the parameter value that is of the first setting parameter and that is obtained before the application program is started specifically comprises:
adjusting, according to a preset luminance adjustment step value, a luminance value of current display luminance of the terminal to a luminance value of display luminance that is of the terminal and that is obtained before the application program is started.

3. The method according to claim 1, wherein the method further comprises:
after the setting control receives an instruction for increasing a parameter value, if it is determined that a parameter value of only one setting parameter in the terminal setting parameters needs to be modified after the application program is started, increasing the parameter value of the setting parameter whose parameter value needs to be modified; or
after the setting control receives an instruction for decreasing a parameter value, if it is determined that a parameter value of only one setting parameter in the terminal setting parameters needs to be modified after the application program is started, decreasing the parameter value of the setting parameter whose parameter value needs to be modified.

4. The method according to claim 1, wherein the method further comprises:
after the setting control receives a modification instruction, displaying a parameter user-defined setting screen, wherein the parameter user-defined setting screen displays the setting parameter that is in the terminal setting parameters and whose parameter value needs to be modified after the application program is started, and a parameter value that is used when the application program runs; and
after the parameter user-defined setting screen receives a parameter value of one setting parameter of the setting parameters whose parameter values need to be modified, using the received parameter value as a latest parameter value that is of the setting parameter and that is to be used when the application program runs, and saving the parameter value.

5. The method according to claim 4, wherein after the displaying a parameter user-defined setting screen, the method further comprises:
after the parameter user-defined setting screen receives an addition instruction, displaying a screen for adding a setting parameter;
receiving a second setting parameter and a parameter value by using the screen for adding a setting parameter, and using the received parameter value as a latest parameter value that is of the second setting parameter and that is obtained after the application program is started; and
saving the received second setting parameter and the latest parameter value that is of the second setting parameter and that is obtained after the application program is started.

6. The method according to claim 4, wherein after the displaying a parameter user-defined setting screen, the method further comprises:
after the parameter user-defined setting screen receives a deletion instruction, displaying a screen for deleting a setting parameter;
receiving a to-be-deleted setting parameter by using the screen for deleting a setting parameter, wherein the to-be-deleted setting parameter is a setting parameter that needs to be deleted from the setting parameters that are in the terminal setting parameters and whose parameter values need to be modified after the application program is started; and
deleting, from the setting parameters that are in the terminal setting parameters and whose parameter values need to be modified after the application program is started, the to-be-deleted setting parameter received by using the screen for deleting a setting parameter.

7. A terminal setting parameter adjustment apparatus, comprising:
a display module, configured to: after an application program in a terminal is started, display a setting control in a display area of the terminal;
a modification module, configured to: after the setting control receives a call instruction, modify a current parameter value of a first setting parameter to a latest parameter value that is of the first setting parameter and that is to be used when the application program runs, wherein the first setting parameter is a setting parameter that is in the terminal setting parameters and whose parameter value needs to be modified after the application program is started; and
a restoration module, configured to: when the application program is exited, modify a current parameter value of the first setting parameter to the parameter value that is of the first setting parameter and that is obtained before the application program is started.

8. The apparatus according to claim 7, wherein the restoration module is specifically configured to:
when the application program is exited, if the first setting parameter is display luminance, adjust, according to a preset luminance adjustment step value, a luminance value of current display luminance of the terminal to a luminance value of display luminance that is of the terminal and that is obtained before the application program is started.

9. The method according to claim 7, wherein the apparatus further comprises a first user-defined setting module, and the first user-defined setting module is configured to:
after the setting control receives an instruction for increasing a parameter value, if it is determined that a parameter value of only one setting parameter in the terminal setting parameters needs to be modified after the application program is started, increase the parameter value of the setting parameter whose parameter value needs to be modified; or after the setting control receives an instruction for decreasing a parameter value, if it is determined that a parameter value of only one setting parameter in the terminal setting parameters needs to be modified after the application program is started, decrease the parameter value of the setting parameter whose parameter value needs to be modified.

10. The method according to claim 7, wherein the apparatus further comprises a second user-defined setting module, and the second user-defined setting module is configured to:
after the setting control receives a modification instruction, display a parameter user-defined setting screen, wherein the parameter user-defined setting screen displays the setting parameter that is in the terminal setting parameters and whose parameter value needs to be modified after the application program is started, and a parameter value that is used when the application program runs; and after the parameter user-defined setting screen receives a parameter value of one setting parameter of the setting parameters whose parameter values need to be modified, use the received parameter value as a latest parameter value that is of the setting parameter and that is to be used when the application program runs, and save the parameter value.

11. The method according to claim 10, wherein the second user-defined setting module is further configured to:
after the parameter user-defined setting screen is displayed and the parameter user-defined setting screen receives an addition instruction, display a screen for adding a setting parameter; receive a second setting parameter and a parameter value by using the screen for adding a setting parameter, and use the received parameter value as a latest parameter value that is of the second setting parameter and that is obtained after the application program is started; and save the received second setting parameter and the latest parameter value that is of the second setting parameter and that is obtained after the application program is started.

12. The method according to claim 10, wherein the second user-defined setting module is further configured to:
after the parameter user-defined setting screen is displayed and the parameter user-defined setting screen receives a deletion instruction, display a screen for deleting a setting parameter; receive a to-be-deleted setting parameter by using the screen for deleting a setting parameter, wherein the to-be-deleted setting parameter is a setting parameter that needs to be deleted from the setting parameters that are in the terminal setting parameters and whose parameter values need to be modified after the application program is started; and delete, from the setting parameters that are in the terminal setting parameters and whose parameter values need to be modified after the application program is started, the to-be-deleted setting parameter received by using the screen for deleting a setting parameter.
